# EUROPEAN PATENT APPLICATION

(11) **EP 0 917 907 A2**
(43) Date of publication of application: **26.05.1999**
(21) Application number: 98120576.8
(22) Date of filing: 30.10.1998
(51) Int. Cl.: B01J 2/16, G01N 15/02

(54) **Granulation method and system with particle size distribution control**

(30) Priority: 30.10.1997 JP 298618/97
(71) Applicant: KYOWA HAKKO KOGYO CO., LTD., Chiyoda-ku, Tokyo 100 (JP); HORIBA, LTD., Minami-ku Kyoto (JP)
(72) Inventor: Watanabe, Yasushi, Namazu-city, Shizuoka (JP); Morimoto, Kiyoshi, Mishima-city, Shizuoka (JP); Hiruta, Satoru, Nagaizumi-chome, Sunto-gun, Shizuoka (JP); Ikeda, Hideyuki, Goryo, Nishikyo-ku, Kyoto (JP)
(74) Representative: Sajda, Wolf E., Dipl.-Phys.

(57) **Abstract**

Production method for granulated materials with a desirable particle size distribution, comprises sampling step of sampling diffracted and/or scattered light data obtained by applying beam light on the growing particles under granulation as the measured data at fixed time intervals, analyzing step of analyzing particle size distribution data of the growing particles by performing a particular arithmetic operation on the measured data, and controlling step of controlling a particle growing factor so as to conform the analyzed particle size distribution data to the corresponding objective particle size distribution data which are previously prepared in time series order according to the granulation procedure to be executed each time of comparison of the particle size distribution data analyzed from the measured data with the corresponding objective particle size distribution data. The system comprises a fluid layer (2) and a sampling measurement instrument (3) which is detachably connected to the fluid layer (2) via a conduit (34), where the growing particles are introduced and the diffracted and/or scattered light data from the growing particles are sampled at fixed time intervals.

## Description

### BACKGROUND OF THE INVENTION

### I . Field of the Invention

The present invention relates to a production method and system for granulated materials which is capable of controlling the particle size distributions using diffracted and/or scattered light phenomenon of particles, and more particularly relates to a production method for repeatedly granulated materials with no dispersion and with the same particle size distribution even when batches process in granulation are different or granulating machines are changed and to a system for efficiently executing the method.

### II. Prior Art

In the pharmaceutical field, many kinds of medicine made of powdered materials have been developed. A production method for manufactured granulated materials in fixed sizes has been also developed in order to improve the difficulties such as adhesion and dust scattering problem due to the smallness of the particles.

A fluid layer granulation system (fluid-bed granulation system) has been well known and widely used in the field of pharmaceutical and food industry and now one example of a prior art will be described hereinafter.

According to the fluid layer granulation system, powdered materials are fluidized by means of heated air, aggregated by spraying a binder solution from a nozzle, and dried, so that the particles of the powdered materials are grown as particles with fixed sizes. This system has an advantage such that mixing, granulation, drying, coating and other process can be executed by the same machine and that particle size, density and shape can be optionally controlled and further that the system can reduce the steps of production procedure, save spacing and prevent contamination.

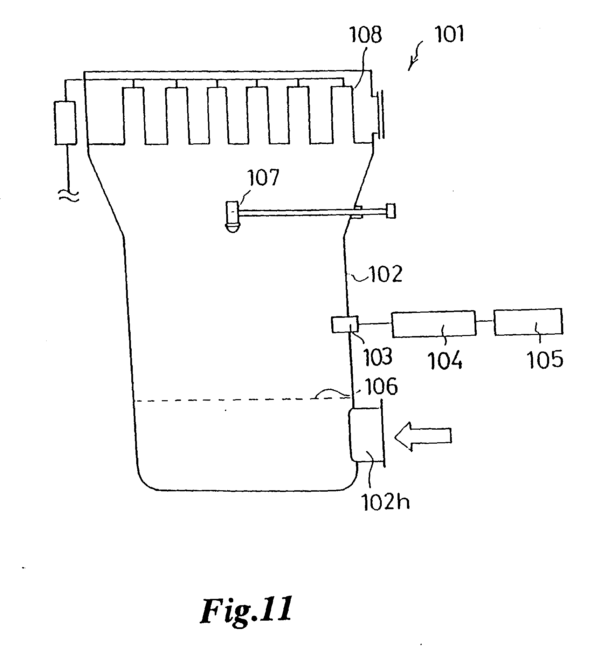

Fig. 11 shows a fluid layer granulation system and a measurement control instrument of particles according to the prior art.

A fluid layer granulation system 101 is provided with a fluid layer 102, a camera means (photo taking means) 103, a controller 104 for the camera means 103, and an arithmetic means 105 for processing the picture images of the particles taken by the camera means 103.

A heated air supply port 102h for supplying heated air into the fluid layer (tank) 102 is provided at the lower part of the fluid layer 102. A fluid bed 106 for temporarily placing powdered material thereon is provided at the lower part of the fluid layer 102 above the heated air supply port 102h. And a nozzle 107 for spraying a binder solution is provided upward in the fluid layer 102. In Fig.11, the numeral 108 refers to a bag filter.

According to the system shown in Fig.11, in the event of granulation, firstly powdered materials are placed on the fluid bed 106 and secondly heated air is applied into fluid layer 102 to fluidize and mix the powdered materials with heated air and then a binder solution is sprayed from a nozzle 107. As a result, powdered materials fluidized with heated air in the fluid layer tank 102 are aggregated together and dried to grow up to granulated materials with specific sizes.

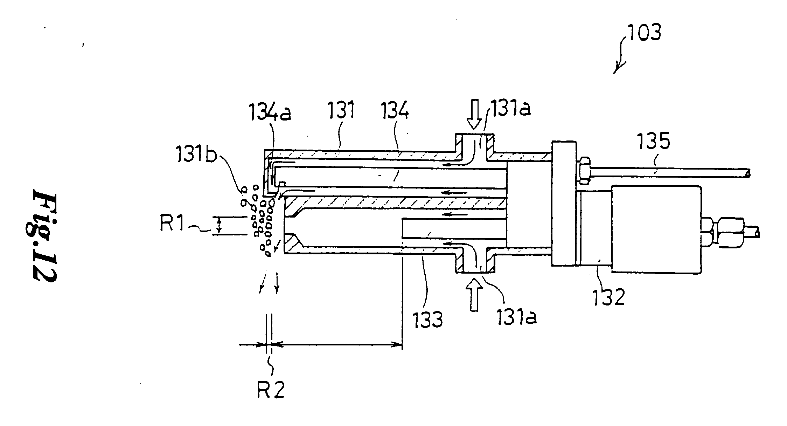

Fig. 12 shows a schematic sectional view of the camera means 103 according to the prior art. The camera means 103 is provided with a cylindrical scope body 131, a CCD camera 132, a lens scope 133 connected to CCD camera 132 and a light guide 134. The CCD camera 132, the lens scope 133, and the light guide 134 are all contained in the scope body 131. Further, a supply ports 131a and a discharge port 131b of purge air are both provided in the scope body 131.
An optical fiber cable 135 is connected to the light guide 134 so that a stroboscope light supplied from a stroboscope source (not shown) via the optical fiber cable 135 is applied in front of the lens scope 133 from a stroboscopic illuminant 134a.

And the stroboscopic illuminant 134a is designed to emit light at fixed time intervals so that when the stroboscopic illuminant 134a emits light, the CCD camera 132 takes a picture of growing particles under granulation in front of the lens scope 133.

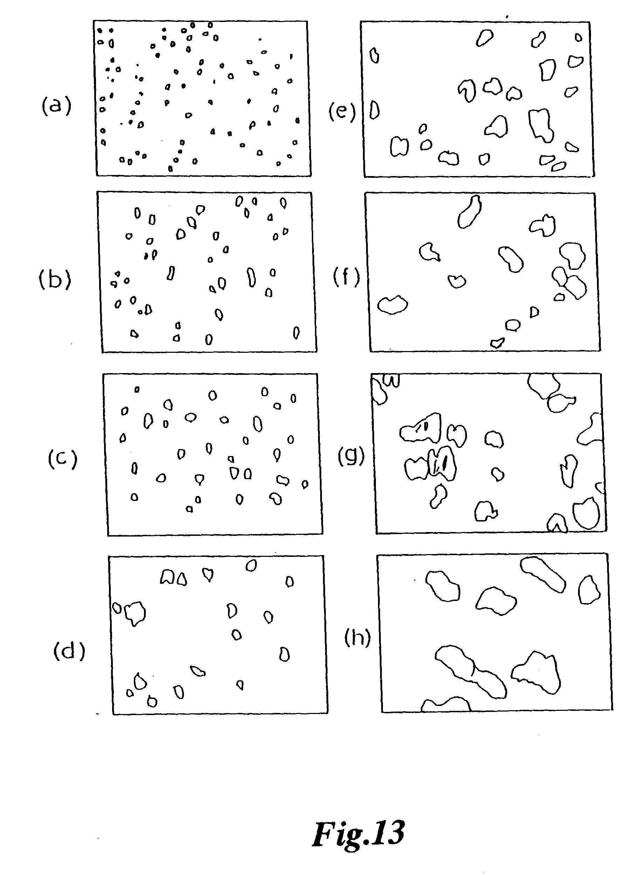

According to thus constructed system, growing particles in the fluid layer 102 are taken a picture by the CCD camera 132 in time series and are sequentially changed into binary picture. And thereafter, some overlapped images in binary pictures are separated each other by executing the algorithm such as circular or a wedge separate method and finally growing particle images are independently extracted in binary pictures as shown in Figs. 13(a) - 13(h).

In this system, growing particles in the fluid layer 102 are recognized as a still binary picture and granulation procedure is employed observing growing particle images represented in binary picture and finished when the growing particles grow up to an objective size in previously set-up diameter.

However, according to the fluid layer granulation system 101 as mentioned above, a picture taking area R1 is limited in front of the lens scope 133 with the focal depth set short distance, and further a picture taking face R2 is very small as shown in Fig. 12.

Therefore, the number of the particle images taken by CCD camera 132 would become decrease as the particles grow up and further would more decrease the number of particle when granulation procedure nears to an end.

As a result, the images of particles thus taken by the CCD camera 132 would not truly represent the particles under granulation in the fluid layer 102.

Further, the fluid-layer system 101 is generally controlled by employing time but the particle size distribution is not controlled at all and therefore the granulation process is mostly controlled only by employing time of the fluid-layer granulation system.

Therefore, particle size distribution would vary in each lot even if the granulated materials with the same particle distribution are tried to be produced as a result that tablet, capsule or granule would also become different in their physical properties.

Now will be described granulated materials manufactured by the prior fluid-layer system in more detail.

Such granulated materials are generally controlled by the average sizes of the particles by controlling the employing time of the fluid layer 102, temperature, binder solution injection amount per hour by a spray and others but not controlled particle size distribution at all.

Consequently, the smaller particles or the larger particles either of which would be biasedly contained in the same amount of the granulated materials comparing with the same capacity of granulated materials each independently manufactured by prior system as mentioned above and therefore particle size distribution would vary in each lot even if the granulated materials with the same particle distribution are tried to be produced.

Consequently, there occur several problems in medicine production such as a tablet and granule as follows.

Namely when medicine is produced in the form of tablets, for example, many particles of the smaller diameter are biasedly included, then the weight of the produced tablets would become more heavier than the predetermined weight, and many particles of the larger diameter are included, then the weight of the produced tablets would become more lighter than the predetermined weight.

And when the particle size distribution of the granulated materials is wide, the content of main ingredient in tablets in each particle finess would not become uniform and further the hardness of the tablet would not also become uniform.

And in case that granule medicine is manufactured from granulated materials with wide particle size distribution, the weight of the medicine contained in each package or each bottle would become different when the same capacity of such granule medicine is separately packed or bottled, and then granule medicine such produced would become in no condition to meet a particle size standard when the degree of that goes too far.

In such prior system, granulated materials are not manufactured at all under controlling of the particle size distribution in spite that such control is important and with the result that medicine tablets manufactured in different lot process would become different in weight or hardness.

### SUMMARY OF THE INVENTION

The present invention is proposed in order to solve the above-mentioned problems.

Therefore a primary object of the invention is to provide a production method which is capable of controlling the particle size distribution of the growing particles under granulation wherein the particle size distribution of the growing particles is compared with corresponding objective particle size distribution data previously prepared in time series in a granulation process and a growing factor such as injection amount of binder solution by a spray is controlled so as to conform the particle size distribution of growing particles to the corresponding objective particle size distribution data every time of sampling the diffracted and scattered light beam from the growing particles during granulation process so that granulated materials with uniform particle size distributions and uniform particle diameters can be repeatedly manufactured even if batches process in granulation are different or granulating machines or fluid layers is changed.

The secondary object of the invention is to provide the system efficiently executing the present method.

Accordingly, inventors of the present invention propose the method and the system as follows.

The present method comprises sampling step of taking in diffracted/scattered light data from growing particles sampled in fixed time intervals, analyzing step of performing arithmetic operation on the sampled light data and controlling step of controlling a growing factor of granulation so that growing particles under granulation are accurately grown up to particles with objective particle size distributions.

In more detailed description, in sampling step, diffracted and/or scattered light data from growing particles are sampled at fixed time intervals by applying beam light on the growing particles under granulation and are taken in the sampled data as measured data.

And in analyzing step, the measured data thus sampled are analyzed by performing particular arithmetic operation and the particle size distribution of the growing particles is calculated.

Further in controlling step, a growing factor such as injection amount of binder solution by a spray is controlled so as to conform the analyzed particle size distribution data of the growing particles to corresponding objective particle size distribution data of the particles previously prepared.

In the analyzing step, diffracted and/or scattered light data from the growing particles are geometrically treated by using diffracted and/or scattered light phenomenon of particles such as Mie Scatter Theory.

According to the theory, side scattering and rear scattering are larger than front scattering as the particle sizes become small. When the particle sizes are larger than 0.56 µ m, the scattering strength of front scattering which has small scattering angle largely changes so that the particle sizes can be distinguished by detecting only front scattering.

However, the particle sizes are less than 0.1 µ m, the scattering strength of front scattering changes slightly and the light strength changes according to side scattering or rear scattering which have large scattering angle.
A light source with short wavelength such as He-Ne laser or a tungsten lamp will be preferably used to distinguish small particle sizes.

In the present invention, the measured data of sampled diffracted and/or scattered light from the particle under granulation may not only calculates particle size distribution data but also calculates statistical values based on the calculated particle size distributions.

In such a case median diameter, 20% particle diameter, 80% particle diameter, peak particle diameter, and average particle diameter of the particles under granulation may be used.

There are several kinds of factors which can be used as particle growing factor according to the function and shape of a granulation system and the ingredient of powdered materials to be granulated. Inventors also propose a method in which such controlable factors are represented or combined with.

According to the production method of the present invention using the diffracted and/or scattered light data from the particles, there is no problem of the decrease of the number of growing particle images due to such a focal depth and picture taking area of CCD camera.

Therefore, when the numbers of the particles are reduced as granulation process nears an end, the diffracted and/or scattered light from the growing particles accurately represents the particle size distributions in that time during granulation process.

Accordingly, in the present invention the analyzed particle size distributions of the growing particles always represent the particles of that time under granulation in the fluid layer, and as a result, granulated materials with the same particle size distributions and the same average particle sizes can be repeatedly manufactured based on the particle size distributions even if batch process of granulation are different or fluid layer are changed when the objective particle size distribution data to be produced are previously prepared.

Further according to the present invention, the growing factor of the particles can be also controlled at real time in accordance with the objective particle size distributions previously prepared, when computer with a rapid calculating faculties is prepared.

According to the present invention as proposed in claim 2, the sampling step of the diffracted and/or scattered light data from the growing particles is executed in a measurement instrument communicating to the fluid layer via a conduit, where floating and suspending particles under granulation in the fluid layer are continuously introduced by a suction means, and beam light is applied from a projection means from one direction and the diffracted and/or scattered light data from the particles is received in a light detection means provided at the other direction in the measurement instrument for sampling.

The sampling step of the diffracted and/or scattered light data from the growing particles can be also executed in a measurement probe detachably secured to the fluid layer as proposed in claim 3, where floating and suspending particles in the fluid layer under granulation enter in a measurement chamber interposed by a light projection means and a light detection means, and where beam light is applied from the light projection means, and diffracted and/or scattered light data from the growing particles are received in the light detection means for sampling.

Particle growing factors available in the present method are also proposed in claim 4, which may be used as a combination of at least one of the followings; spraying amount per hour of a binder solution on powdered materials, the temperature and the flow amount of the heated air supplied into the fluid layer, and the amount of moisture contained in the powdered materials.

The relation between such factors and growing speed of the granulation will be described later in the detailed description of the preferred embodiment.

In the present invention, laser beam having uniform wavelength and uniform phase may be also available as proposed in claim 5, as a beam light for applying on the growing particles under granulation for sampling. Smaller particle sizes can be distinguished and the particle size distributions can be accurately analyzed using a laser beam of short wavelength.

According to the present invention systems for granulated materials are also proposed in claim 6 to 10 by the inventors.

The present granulation system as proposed in claim 6 by the inventors comprises a fluid layer for fluidizing powdered materials by supplying heated air, aggregating and drying the fluidized powdered materials to be grown as particles with fixed sizes while spraying a binder solution, and a sampling measurement instrument for sampling diffracted and/or scattered light data from the growing particles under granulation at fixed time intervals, which is detachably secured to a feed position of the fluid layer.

The measurement instrument is connected to a conduit detachably secured to a feed position of the fluid layer, a measurement cell communicating the conduit is provided, in which a pair of light transmission windows are provided with a fixed spacing, and a light projection means and a light detection means are both disposed interposing the pair of light transmission windows.

The measurement instrument is farther provided with a suction means for introducing a part of the particles floating and suspending in the fluid layer under granulation into the measurement cell by suction air.

According to the granulation system of the present invention, the diffracted and/or scattered light data from the growing particles are detected in the light detection means by applying beam light on the particles under granulation from the light projection means while the fluid layer is operated.

Since the measurement instrument mentioned above is designed to be detachably secured to a fixed position of the fluid layer, the measurement instrument can be removed from the fluid layer when it isn't required and further, the measurement instrument can be cleaned up easily when it is removed.

The production system as proposed in claim 7 is provided with purge gas supply means where it is designed to supply purge gas such as air and to keep clean each surface of the pair of light transmission windows of the measurement cell for preventing the dust particles or growing granulated materials under granulation from adhering thereto.

Consequently the light detection means is prevented from receiving the diffracted and/or scattered light weakened by the dust particles or growing granulated materials attached on the transmission windows. Therefore, the diffracted and/or scattered light data from the growing particles under granulation are adequately received in the light detection means.

Further according to the present invention as alternatively proposed in claim 8, the production system has a sampling measurement probe which is designed to be detachably inserted into the fluid layer for sampling diffracted and/or scattered light data from the growing granulated materials.

The measurement probe is provided with a measurement chamber surrounded by a pair of light transmission windows, where a part of the growing particles floating or suspending in the fluid layer is introduced, and the light transmission windows are interposed by a light projection means and a light detection means.

According to such a production system of the present invention, light beam can apply on a part of the growing particles entering the measurement chamber and thereby to sample the diffracted and/or scattered light data from the growing particles are sampled at fixed time intervals when the measurement probe is inserted into a fixed position of the fluid layer.

Further, the measurement probe has a measurement chamber where a part of the growing particles floating or suspending in fluid layer naturally are entered to sample the diffracted and/or scattered light data from the growing particles by applying light from the light projection means.

Therefore suction means for forcibly introducing the growing particles floating-or suspending in the fluid layer into the measurement cell isn't required.

The measurement probe is designed to be detachably inserted into the fluid layer so that it can be removed when it isn't required, and therefore it may be easily cleaned up when it is removed.

Further according to the present system as proposed in claim 9, wherein purge gas is supplied for preventing the dust particles or growing particles under granulation from adhering to each surface of the pair of light transmission windows of the measurement chamber and it has same advantage as in claim 7 mentioned above.

In the present invention as proposed in claim 10, the light projection means may be a laser beam with uniform wavelength and phase for the present system.

### BRIEF DESCRIPTION OF THE DRAWINGS

Fig. 1 shows one preferable embodiment of a fluid layer granulation system of the present invention.
Fig. 2 shows a sampling measurement instrument for introducing the growing particles floating or suspending in a fluid layer to sample the diffracted and/or scattered light data from the growing particle.
Fig. 3 shows a schematic diagram of a diffracted and/or scattered light data measuring system for the growing particles under granulation.
Fig. 4 is a partial longitudinal sectional view showing a construction of a measurement instrument.
Figs. 5(a) and 5(b) show a partial sectional views of the measurement cell wherein Fig. 5(a) is a cross sectional view of the measurement cell seen from the top side and Fig. 5(b) is a longitudinal sectional view of the measurement cell seen from the horizontal side.
Fig. 6 shows objective data of particle size distributions arranged in time series order previously prepared for a granulation process.

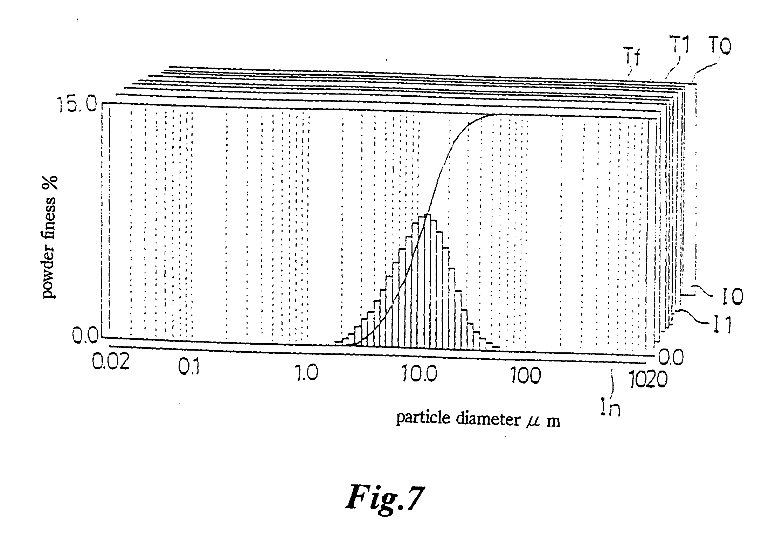

Fig. 7 shows calculated and analyzed data of particle size distributions from sampled data of growing particles under granulation arranged in time series order in a granulation process.
Figs. 8(a) and 8(b) show a partial sectional views of alternative measurement cell wherein Fig. 8(a) is a cross sectional view of the measurement cell seen from the top side and Fig. 8(b) is a longitudinal sectional view of the measurement cell seen from the horizontal side.
Fig. 9 shows another preferable embodiment of a fluid layer granulation system of the present invention.
Fig. 10 shows a sampling measurement probe for entering growing particles floating or suspending in a fluid layer to sample the diffracted and/or scattered light data from the growing particles.
Fig. 11 shows a schematic diagram of a fluid layer granulation system and a measurement control device for particles according to the prior art.
Fig. 12 shows a schematic sectional view of a camera means according to the prior art.
Figs. 13 (a) - 13(h) show images of the particles under granulation represented in still picture arranged in time series order taken by the camera means of the prior art.

### DESCRIPTION OF THE PREFERRED EMBODIMENTS

### [Embodiment 1]

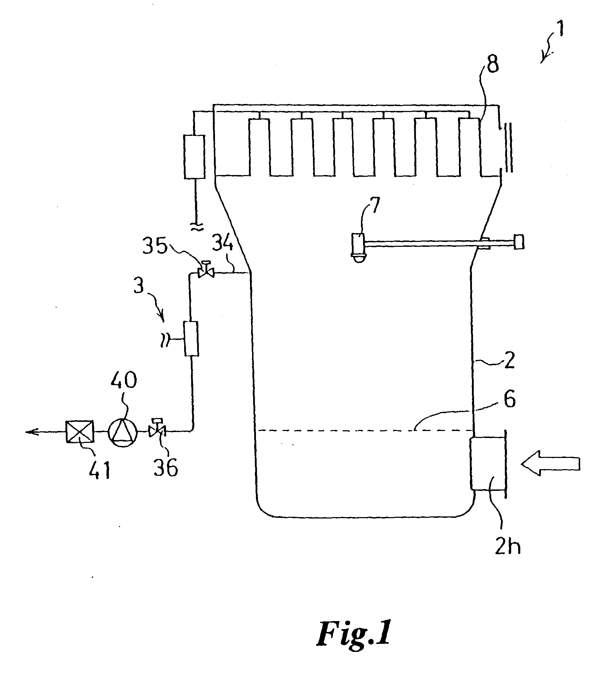

Fig. 1 shows one embodiment of a fluid layer granulation system provided with a sampling measurement instrument for executing the production method of the present invention.

A fluid-layer granulation system (a fluid-bed granulation system or an air suspension granulation system) 1 is provided with a fluid layer 2 and a sampling measurement instrument 3 detachably attached to the fluid layer 2.

A heated air supply port 2h for supplying heated air into the fluid layer 2 is provided at a fixed position at the lower part of the fluid layer 2 and a fluid bed 6 for temporarily placing powdered materials is provided above the heated air supply port 2h. A nozzle 7 for spraying a binder solution is provided at the upper part of the fluid layer 2. In Fig. 1 the numeral 8 refers to a bag filter. The numerals 35 and 36 refer to valves for controlling supply of the growing particles under granulation to the measuring device 3, and the numeral 41 refers to a dust collection filter.

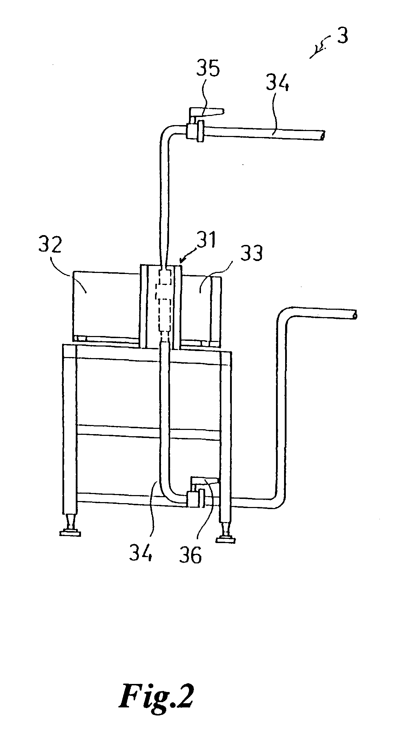

Fig. 2 schematically shows a sampling measurement instrument 3.

The measurement instrument 3 is provided with a conduit 34 detachably connected to a fixed position in the fluid layer 2, a measurement cell 31 interposed in the conduit 34, a suction means 40 such as a blower provided at the terminal end of the conduit 34, a light projection means 32 for applying light to the measurement cell 31, and a light detection means 33 positioned so as to face the light projection means 32 through the measurement cell 31.

The suction means 40 is designed so as to introduce a part of the growing particles under granulation into the measuring device via the conduit 34.

A laser light projecting optical system is used as the light projection means 32 and a diffracted/scattered light measuring optical system is used as the light detection means 33 in the sampling measurement instrument 3.

When the suction means 40 is driven, negative air flow carries a part of the growing particles floating or suspending in the fluid layer 2 into the measurement cell 31 via the conduit 34.

Laser light is applied on the growing particles carried into the measurement cell 31 from the light projection means 32 and the light diffracted and/or scattered from the particles is received in the light detection means 33.

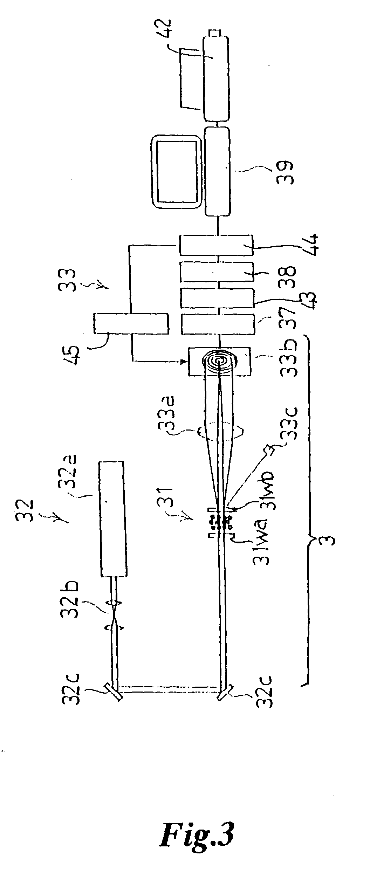

Fig. 3 shows a detailed construction of the laser light projecting optical system 32 and the diffracted and/or scattered light measuring optical system 33.

The laser light projecting optical system 32 is provided with a laser light source 32a, a collimater 32b and a mirror 32c if necessary.

The optical system 33 is provided with a condensing lens 33a for condensing light applied from the laser light projecting optical system 32 and diffracted and/or scattered light from the growing particles in the measurement cell 31, a ring detector 33b (silicon detector) provided on the focal face of the condensing lens 33a, and a sensor 33c for detecting the light scattered aside.

The outputs of the ring detector 33b and the sensor 33c are inputted into an arithmetic means 39 via an amplifier 37 and an A/D converter, and the particle size distributions are calculated by means of particular algorithm previously prepared.

In Fig. 3, the numeral 42 refers to a printer for printing several kinds of data processed in the arithmetic means 39. The numeral 43 refers to a sample hold circuit, 44 refers to a data transfer, and 45 refers to an automatic focus controller.

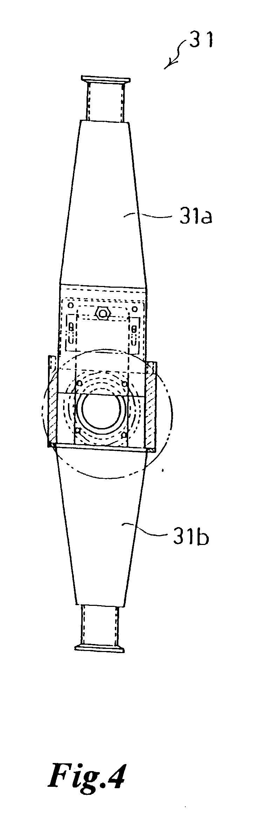

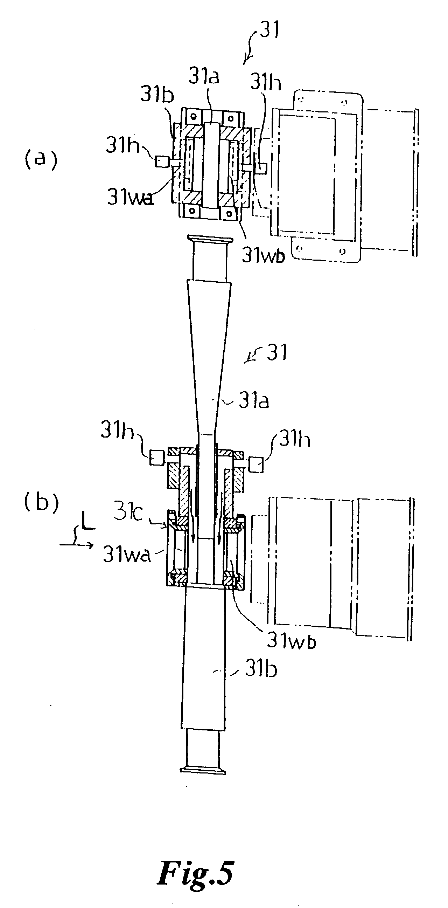

Fig. 4 and Fig. 5 show sectional views of the measurement cell 31.

The measurement cell 31 is constructed such that an upper cell part 31a and a lower cell part 31b which is somewhat larger than the upper part 31a are stacked airtightly.

The upper cell part 31a is designed such that its shape is gradually changed from a rectangular shape to a conical shape upwardly.

The lower cell part 31b is designed such that its upper section is rectangular and gradually changed into conical downwardly. A square part 31c is shaped flat in the light direction L, and the light transmission windows 31wa and 31wb are oppositely faced each other with a feed spacing.

In this measurement cell 31, the light transmission windows 31wa and 31wb may be preferably made of quartz.

The light projection means 32 is provided on the outside of the light transmission window 31wa and the other hand, the light detection means 33 is provided on the outside of the light transmission window 31wb, neither of which is shown in Fig. 5.

When the suction means 40 is operated to employ the fluid layer 2 , a part of the growing particles are introduced through the pair of transmission windows 31wa and 31wb and then beam light is applied on the particles to sample the diffracted and/or scattered light from the particles and the diffracted and/or scattered light data is received in the light detection means 33.

Simultaneously purge gas (its flow direction is shown as an arrow in Fig. 3(b)) is supplied around each surface of the light transmission windows 31wa and 31wb. In the measurement cell 31 as shown in Fig. 5, the compressed air introduction ports 31h and 31h are provided above the light transmission windows 31wa and 31wb respectively and are connected to an air source such as a compressed cylinder (not shown) via a pipe (not shown).

Therefore, purge gas prevents the particle dust and/or the growing particles from adhering to the inside surfaces of the light transmission windows 31wa and 31wb.

The upper cell part 31a is designed in such a manner that its section is gradually changed from a cone to a rectangular. The lower cell part 31b is designed such that its upper section is rectangular and gradually changed into conical downwardly. The square part 31c is shaped flat into the light direction L, whereby the particles under granulation are prevented from piling each other when they pass through the space between the light transmission windows 31wa and 31wb.

Therefore, the growing particles under granulation can be accurately measured by sampling diffracted and/or scattered light data from the growing particles.

According to the preferred embodiment 1, purge gas supplied from the air source such as a compressor cylinder (not shown) flows on each surface of the light transmission windows 31wa and 31wb so as to prevent the particle dust or the growing particles from adhering to the surface. However, it should be understood that the embodiment is mere one of the preferred embodiments.

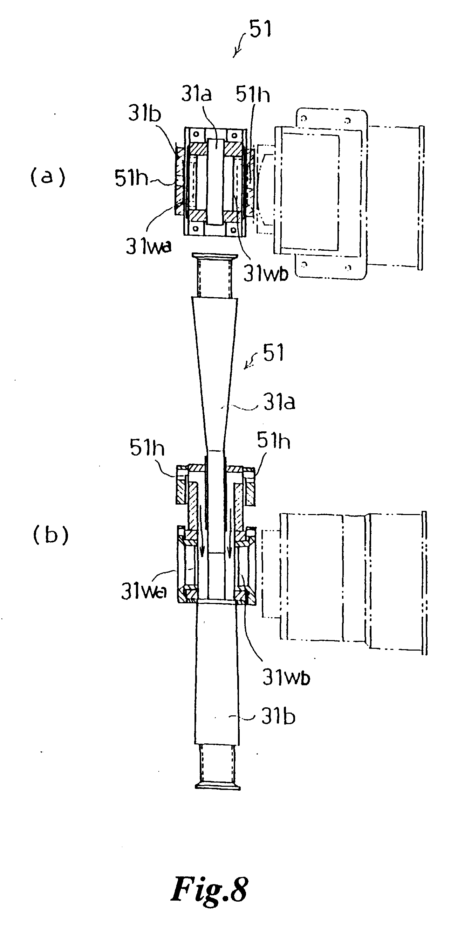

Otherwise, like a measurement cell 51 in Fig. 8, it may be designed such that open air introduction ports 51h and 51h are provided above the light transmission windows 31wa and 31wb and open air is supplied as purge gas through the ports 51h and 51h to each surface of the transmission windows 31wa and 31wb when the suction means 40 is driven at a fixed revolution.

Then the same numerals are used in Fig. 8 as used in describing the measurement cell 31 of Fig. 5 so their explanations are omitted.

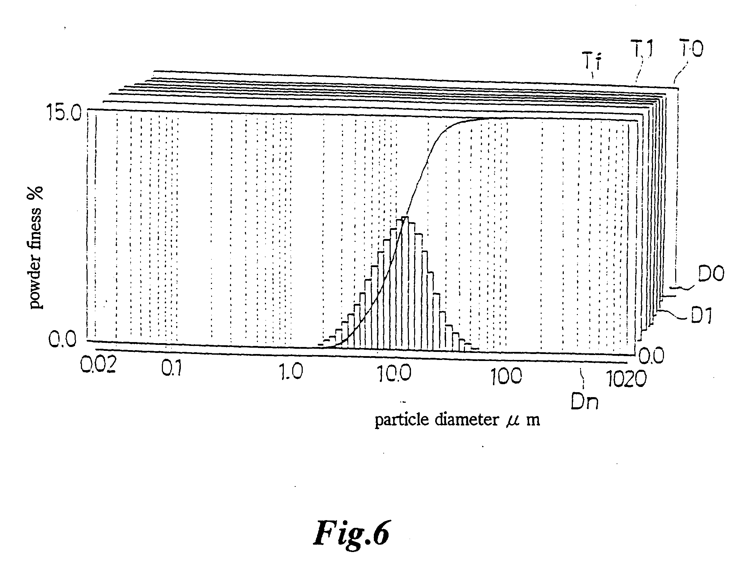

Fig. 6 shows an objective data of particle size distributions stored in a memory of the arithmetic means 39. Objective data D0, D1, ··· Dn of particle size distributions are previously prepared for the granulation processes from the start (T0) to the end (Tf) at fixed time intervals (T0, T1, ··· Tn) in time series and stored in the memory.

Production method for granulated materials will be described according to the fluid-layer granulation system 1.

In the event of granulation, firstly powdered materials are placed on the fluid bed 6 and secondly heated air is applied into the fluid layer 2 to fluidize and mix the powdered materials with heated air and then a binder solution is sprayed from a nozzle 7. As a result, powdered materials fluidized with heated air in the fluid layer 2 are aggregated together and dried to grow up to granulated materials with fixed sizes.

While the fluid layer 2 is employed in a granulation process, the valves 35 and 36 are opened, and the suction means 40 is driven at a fixed revolution.

As the result that a part of the particles floating or suspending in the fluid layer 2 is sucked to the measurement cell 31 and at the same time purge gas supplied from the air source such as a compressor cylinder (not shown) flows on each surface of the light transmission windows 31wa and 31wb so as to prevent the particle dust or the growing particles from adhering to the each surface.

In the measurement cell 31, laser beam is applied at fixed time intervals (T0, T1,···Tf), and the diffracted and/or scattered light from the particles are detected for sampling in the light detection means 33 at fixed time intervals.

Then the diffracted and/or scattered light data from the growing particles are taken in the arithmetic means 39 as a measured data each time of sampling, and the particle size distributions for sampling time are calculated by an arithmetic operation.

In the comparison block of the arithmetic means 39, the particle size distribution data of the growing particles (Io, I1, ··· In) are obtained by analyzing the measured data sampled at fixed time intervals (To, T1, ··· Tf) and sequentially compared with objective data (D0, D1, ··· Dn) corresponding to the particle size distributions previously stored in the memory.

And the each time of such comparison, particle growing factors, for example the temperature, the flow amount of heated air and the amount per hour of spraying of a binder solution, are controlled so as to conform the analyzed particle size distribution data to the objective corresponding data.

As for the relation between the particle growing factor and granulation speed of the particles, when the spraying amount of a binder solution per hour is increased, the particle size of granulating material becomes large. And when the temperature of heated air is lowered, the particle size also rapidly becomes large.

Further, the growing speed of the particles under granulation is closely related to the moisture content of the powdered materials. When the spraying amount/time of a binder solution is constant and the amount of heat supplied in the fluid layer 2 is reduced, the growing speed of the particles becomes fast. If the amount of heat is increased, the growing speed becomes slow.

The amount of heat is determined by the temperature and the flow amount of the heated air supplied in the fluid layer 2. When the spraying amount/time of a binder solution and the flow amount of the heated air are constant and the temperature of the heated air is lowered, the moisture content in the fluid layer 2 becomes relatively high, whereby the growing speed of the particles may become fast. When the temperature of the heated air is constant and the flow amount of the heated air is reduced, the same result can be obtained.

However, when the flow amount of the heated air is constant and the temperature is heightened, or the temperature is constant and the flow amount is increased, the moisture content in the fluid layer 2 may relatively become low, whereby the growing speed of the particles becomes slow.

If there are many small particles in the particle size distribution data obtained by sampling and analyzing when particle size distribution data obtained by analyzing the sampled and measured data at time Tc is compared to the objective data at the time of Tc, the spraying amount/time is increased.

However, if there are many large particles, the spraying amount/time is reduced. When both of the particle size distribution are similar, the spraying amount/time is kept.

At the next sampling time, that is △ T is passed from the time Tc, the particle size distributions obtained by analyzing the sampled and measured data and the objective data are compared and the spraying amount/time is controlled based on the result of the comparison.

Such a sampling and a comparing are repeated until granulated materials are grown up to the particles with the objective particle size distribution.

If particle growing factor is controlled each time of sampling, the particle size distribution of the growing particles can be controlled at real time in a granulation process.

An arithmetic operation means with high-speed processing ability can be executed at real time controlling, but usually, growing factor of particles may be controlled at fixed time intervals waiting for the growing of the particles.

In the above-mentioned description, the spraying amount/time of a binder solution is controlled, but other growing factors can be controlled in the same way.

According to the present invention, the growing particles under granulation are introduced into the particle size distribution measuring cell 31 while the fluid layer 2 is active, or operated, so automatic sampling can be executed by applying beam light at fixed time intervals and then the particle growing factor can be automatically controlled. Therefore, granulated material with desired particle size distribution can be repeatedly manufactured by driving the granulation means.

Further according to the present invention, since the particle size distribution measuring device 3 is detachably attached to the fixed position of the fluid layer 2, it can be removed if unnecessary and therefore, its cleaning can be done easily.

### [Preferred Embodiment 2]

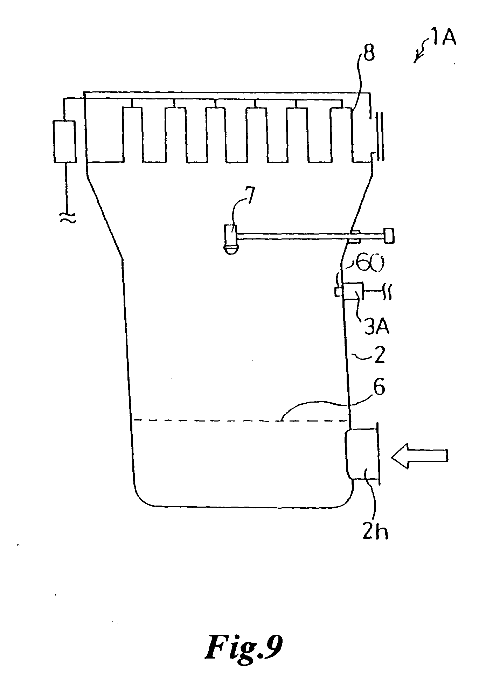

Fig. 9 shows another embodiment of fluid-layer granulation system 1A provided with a sampling measurement probe 60 for particle size distribution for executing the granulation method of the present invention.

The fluid-layer granulation system 1A is provided with a fluid layer 2 and a sampling measurement instrument 3A.

The other parts of the fluid-layer granulation system 1A are the same as the fluid-layer granulation system 1 shown in Fig. 1 and description will be omitted by designating same numerals to corresponding parts.

The measurement instrument 3A is a probe type structure where a probe portion 60 (measuring part) is directly inserted into a fixed position of the fluid layer 2.

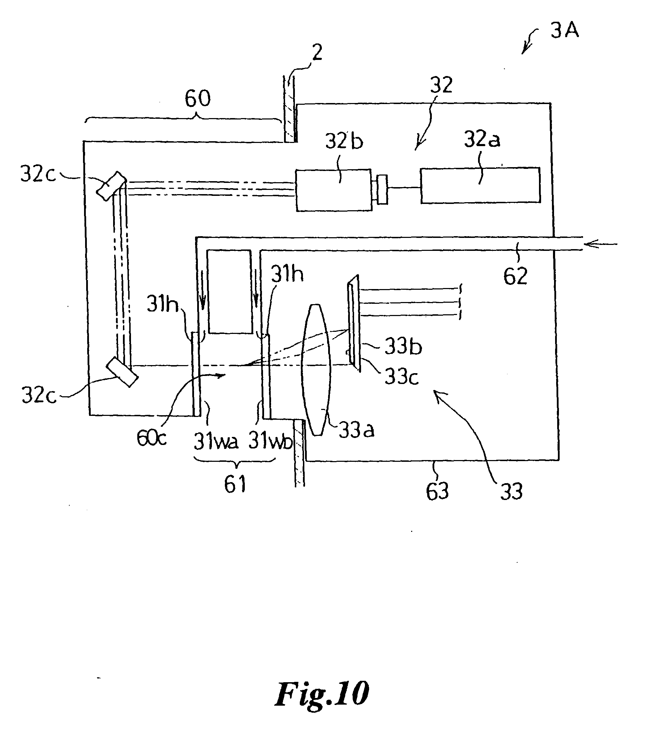

Fig. 10 is a sectional view of the measurement instrument 3A.

The probe 60 has a concave (measurement chamber) 60c provided with light transmission windows 31wa and 31wb facing each other so as to construct a measurement cell 61.

Purge gas is supplied on each surface of the light transmission windows 31wa and 31wb.

In the measurement cell 61, compressed air introduction ports 31h and 31h are provided around the light transmission windows 31wa and 31wb and are connected to an air source such as a compressed cylinder (not shown) via a pipe 62.

Accordingly, the particle dust and/or the growing particles granulation are prevented from adhering to the surfaces of the light transmission windows 31wa and 31wb.

A laser light projecting optical system 32 having a laser light source 32a comprising a lightening means, a collimater 32b, and plural mirrors 32c and 32c is provided inside of the light transmission window 31wa.

A measuring optical system 33 has a detector 33b for receiving the diffracted and/or scattered light data from the growing particles, a light source 32a, a sensor 33c for detecting the light scattering aside, and a condensing lens 33a is provided inside of the light transmission window 31wb. The measured values of the detector 33b and the sensor 33c are inputted in an arithmetic means (not shown).

Other construction of the sampling instrument probe 3A is the same as the measurement instrument 3 in Fig. 3, so explanations of the same parts and members are omitted here by using the same numerals.

According to the granulation system 1A, the probe 60 is inserted into a fixed position which is 80% from the top surface of the powdered materials contained in the fluid layer 2, where the top surface goes up and down while granulation.

As described in the preferred embodiment 1, powdered materials are placed on the fluid bed 6, fluidized by supplying heated air therein from the supply port 2h, mixed with the heated air, aggregated by spraying a binder solution from the nozzle 7, and dried, thereby to be grown up to the particles with fixed sizes.

Purge gas is supplied on each surface of the light transmission windows 31wa and 31wb so as to prevent the particle dust or the growing particles from adhering to the surface. Laser beam is applied from the laser light projecting optical system 32 at fixed time intervals (T0, T1,···Tf), and the diffracted and/or scattered light data from the growing particles in the measurement cell 61 is received and sampled in the measuring optical system 33 and inputted in the arithmetic means 39.

As described in preferred embodiment 1, granulation is executed by controlling particle growing factors as mentioned before.

According to the granulation system 1A, the same effect as the granulation system 1 is expected, and further, following effects are also expected.

The probe 60 can be directly inserted in the fluid layer 2, laser beam is applied on the particles under granulation to sample the measured data. Therefore, suction means and a conduit and other parts aren't required, as a result that the system is simplified in construction and in space saving.

In the above-mentioned embodiments 1 and 2, the particle growing factors are controlled so that the measured and calculated particle size distribution of the growing particles conforms to the objective particle size distribution.

However, a standard particle diameter may be calculated by the measured and calculated particle size distribution and granulation may be executed so as to obtain the particle size distribution with the standard particle sizes.

And in this case the standard particle diameter may be median diameter, 20% particle diameter, 80% particle diameter, peak particle diameter, or average particle diameter.

## Claims

1. Production method for granulated materials wherein powdered materials are fluidized by being mixed with heated air in a fluid layer (2) and the fluidized powdered materials are aggregated and dried to be grown as particles with fixed sizes by spraying a binder solution, said method comprising the steps of:
sampling diffracted and/or scattered light data obtained by applying beam light on the growing particles under granulation at fixed time intervals and taking in said sampled light data as measured data,
analyzing particle size distribution data of said growing particles by performing arithmetic operation on said measured data, and
controlling a particle growing factor so as to conform said analyzed particle size distribution data to corresponding objective particle size distribution data which are previously prepared in time series order according to the granulation procedure to be executed each time said particle size distribution data analyzed from said measured data are compared with said corresponding objective particle size distribution data.

2. Production method for granulated materials as set forth in claim 1, wherein said diffracted and/or scattered light data from said growing particles are sampled in a measurement instrument (3) communicating to said fluid layer (2) via a conduit (34), where the growing particles under granulation are introduced by suction means (40), and said beam light is applied from a light projection means (32) from one direction and diffracted and/or scattered light data from said growing particles are received into a light detection means (33) from the other direction.

3. Production method for granulated materials as set forth in claim 1, wherein said diffracted and/or scattered light data from said growing particles are sampled in a measurement probe (60) attached in said fluid layer (2), which has a measurement chamber (60c) interposed by a light projection means (32) and a light detection means (33) and floating or suspending growing particles in said fluid layer (2) under granulation are entered and said diffracted and/or scattered light data from said growing particles are received into said light detection means (33) when beam light is applied from said light projection means (32).

4. Production method for granulated materials as set forth in claim 1, 2 or 3, wherein a particle growing factor is combination of at least one of the followings; injection amount per hour of a binder solution on powdered material by said spray, the temperature and the flow amount of the heated air supplied into said fluid layer (2), and the amount of moisture contained in said powdered materials.

5. Production method for granulated materials as set forth in claim 1, 2, 3 or 4, wherein said diffracted and/or scattered light data are obtained by emitting laser beam.

6. Production system for granulated materials, comprising:
(a) a fluid layer (2) for fluidizing powdered materials mixed with heated air, aggregating, and drying the fluidized powdered materials to be grown as particles with fixed sizes, and
(b) a sampling measurement instrument (3) for sampling diffracted and/or scattered light data from the growing particles under granulation, detachable at a fixed position of said fluid layer (2),
said measurement instrument (3) comprising;
- a conduit (34) detachable at a fixed position of said fluid layer (2),
- a measurement cell (31) communicating said conduit (34), in which a pair of light transmission windows (31wa, 31wb) are provided with a fixed spacing, interposed by both a light projection means (32) and a light detection means (33), and
- a suction means (40) for introducing a part of the growing particles under granulation in said fluid layer (2) into said measurement cell (31),
(c) whereby said diffracted and/or scattered light data from said growing particles are detected in said light detection means (33) by applying beam light from said light projection means (32) while said fluid layer (2) is operated.

7. Production system for granulated materials as set forth in claim 6, wherein purge gas is supplied for preventing the dust particles and/or said growing particles under granulation from adhering to each surface of said pair of light transmission windows (31wa, 31wb) of said measurement instrument (31).

8. Production system for granulated materials, comprising:
(a) a fluid layer (2) for fluidizing powdered materials mixed with heated air, aggregating, and drying the fluidized powdered materials to be grown as particles with fixed sizes by spraying a binder solution, and
(b) a sampling measurement probe (60) for sampling diffracted and/or scattered light data from the growing particles under granulation, capable of detachable insertion into said fluid layer (2),
said sampling measurement probe (60) comprising;
- a measurement chamber (60c) surrounded by light transmission windows (31wa, 31wb), for entering the floating and/or suspending growing particles in said fluid layer (2), and
- transmission windows (31wa, 31wb) provided with a fixed spacing, interposed by both a light projection means (32) and a light detection means (33), and
(c) whereby said diffracted and/or scattered light data from said growing particles are detected in said light detection means (33) by applying beam light from said light projection means (32) while said fluid layer (2) is operated.

9. Production system for granulated materials as set forth in claim 8, wherein purge gas is supplied for preventing the dust particles and/or said growing particles under granulation from adhering to each surface of said pair of light transmission windows (31wa, 31wb) of said measurement probe (60).

10. Production system for granulated powdered materials as set forth in claim 6, 7, 8 or 9, wherein said light projection means emits a laser beam.
